# EUROPÄISCHE PATENTANMELDUNG

(11) **EP 0 849 446 A1**
(43) Veröffentlichungstag der Anmeldung: **24.06.1998**
(21) Anmeldenummer: 97121419.2
(22) Anmeldetag: 05.12.1997
(51) Int. Cl.: F01N 7/18

(54) **Einrichtung zum Anschluss eines Rohrkrümmers**

(30) Priorität: 21.12.1996 DE 19653908
(71) Anmelder: Daimler-Benz Aktiengesellschaft, 70546 Stuttgart (DE); Heinrich Gillet GmbH & CO. KG, 67480 Edenkoben (DE); REINZ-DICHTUNGS-GMBH, 89233 Neu-Ulm (DE)
(72) Erfinder: Kaifel, Hans-Jörg, 73614 Schorndorf (DE); Dürr, Gerd, 67434 Neustadt (DE); Baudisch, Wolfgang, 76833 Siebeldingen (DE); Reuther, Georg, 76835 Hochstadt (DE); Hieble, Franz, 89250 Senden (DE); Clauss, Roland, 73733 Esslingen (DE)

(57) **Zusammenfassung**

Die Erfindung bezieht sich auf eine Einrichtung zum Anschluß eines Rohrkrümmers (1-3) an einen nach außen hin offenen Gaskanal (5-7) eines Zylinderkopfes (4) einer Brennkraftmaschine mit einer im Bereich des Gaskanals (5-7) am Zylinderkopf (4) angeordneten Aufnahmetasche (21-23), in die ein Teil (11,13,15) eines dem Gaskanal (5-7) zugeordneten Flansches (8-10) des Rohrkrümmers (1-3) einschiebbar und über diese am Zylinderkopf (4) abstützbar ist, wobei außerhalb der Aufnahmetasche (21-23) dem Flansch (8-10) zugeordnete Spannmittel (28) angeordnet sind und wobei der Flansch (8-10) mit dem Zylinderkopf (4) über eine Dichtung (20) abdichtend verbunden ist.
Um eine gattungsgemäße Einrichtung zum Anschluß eines Rohrkrümmers (1-3) an einen Zylinderkopf (4) einer Brennkraftmaschine derart auszubilden, daß bei gleichbleibender Zuverlässigkeit der Flanschverbindung ein erheblich vergrößerter Gestaltungsspielraum bei der Anordnung der Rohrkrümmer (1-3) ermöglicht wird und gleichzeitig die Bauteilbelastungen der Rohrkrümmer (1-3) während des Betriebs der Brennkraftmaschine wesentlich reduziert werden, wird **erfindungsgemäß** vorgeschlagen, daß das Spannmittel (28) eine am Zylinderkopf (4) lösbar befestigbare Führungsleiste (30) umfaßt, über die der mindestens eine Flansch (8-10) an den Zylinderkopf (4) anpreßbar ist, wobei zwischen Flansch (8-10) und Zylinderkopf (4) eine Feder (33) angeordnet ist, über die der Anpreßdruck des Flansches (8-10) definiert einstellbar ist.

## Beschreibung

Die Erfindung bezieht sich auf eine Einrichtung zum Anschluß eines Rohrkrümmers an einen Zylinderkopf einer Brennkraftmaschine gemäß dem Oberbegriff des Patentanspruchs 1.

Aus der DE 42 05 454 A1 ist bereits eine gattungsgemäße Einrichtung zum Anschluß eines Rohrkrümmers bekannt. Diese umfaßt einen an dem Rohrkrümmer befestigten Flansch, der an einen nach außen offenen Gaskanal eines Zylinderkopfes einer Brennkraftmaschine anschließbar ist. Zur Flanschbefestigung dient zum einen eine am Zylinderkopf im Bereich des Gaskanals angeordnete Aufnahmetasche zum Einschieben und Einklemmen eines Flanschabschnittes des Rohrkrümmers. Zum anderen ist außerhalb des in die Aufnahmetasche eingefügten Flanschabschnittes eine Schraubenverbindung zwischen Zylinderkopf und Flansch vorgesehen, wobei mittels einer unmittelbar mit dem Flansch verschraubten Befestigungsschraube dieser am Zylinderkopf fixiert wird.

Zum allgemeinen technischen Hintergrund wird noch auf die Druckschriften DE 44 30 339 A1, DE 43 38 719 A1 und DE 27 42 296 A1 verwiesen.

Ein Nachteil von Einrichtungen der gattungsgemäßen Art liegt darin, daß beispielsweise in Auspuffkrümmern von Abgasanlagen, die im Betrieb der Brennkraftmaschine hohen Temperaturen ausgesetzt sind, aufgrund der thermischen Ausdehnung hohe Spannungen auftreten. Als Folge dieser Spannungen treten unerwünschte Verformungen der thermisch hoch belasteten Auspuffkrümmer auf, wodurch die Gefahr eines frühzeitigen Werkstoffversagens besteht. Ein weiterer Nachteil derartiger Einrichtungen liegt darin, daß die konstruktive Freiheit bei der Gestaltung der Rohrkrümmer wegen der zu fordernden Zugänglichkeit der Flanschschrauben stark eingeschränkt ist.

Der Erfindung liegt die Aufgabe zugrunde, eine gattungsgemäße Einrichtung zum Anschluß eines Rohrkrümmers an einen Zylinderkopf einer Brennkraftmaschine derart auszubilden, daß bei gleichbleibender Zuverlässigkeit der Flanschverbindung ein erheblich vergrößerter Gestaltungsspielraum bei der Anordnung der Rohrkrümmer ermöglicht wird und gleichzeitig die Bauteilbelastungen der Rohrkrümmer während des Betriebs der Brennkraftmaschine wesentlich reduziert werden.

Die Aufgabe wird erfindungsgemäß durch die im Kennzeichen des Patentanspruches 1 gegebenen Merkmale gelöst. Die Merkmale der Unteransprüche geben vorteilhafte Aus- und Weiterbildungen der Erfindung an.

Ein Vorteil der vorschlagsgemäßen Einrichtung liegt darin, daß durch die erfindungsgemäße Befestigung des Flansches, beispielsweise bei einer thermischen Ausdehnung und Abkühlung des Rohrkrümmers, prinzipiell eine Relativbewegung zwischen Flansch und Zylinderkopf in einer Auflagefläche des Flansches ermöglicht ist. So erfolgt bei zu starker Längsdehnung des Rohrkrümmers ein entsprechender Längenausgleich des Rohrkrümmers durch besagte Relativbewegung, wodurch eine unerwünschte thermische Verformung des Rohrkrümmers vermieden wird.

Des weiteren können durch die erfindungsgemäße Einrichtung gasführende Bauteile auch die Flansche überdecken, da kein Schraubenfreigang mehr erforderlich ist. Dadurch sind für diese Bauteile größere gasführende Querschnitte möglich. Bei Rohrkrümmern ergibt sich zudem die Möglichkeit, die Krümmungsradien variabler zu gestalten, wodurch strömungsgünstigere Rohrverläufe ermöglicht werden. Insbesondere bei Sammelrohren ist durch die größere konstruktive Variabilität eine einfachere Schalengeometrie und auch eine fertigungstechnisch einfachere Lage der Trennstelle der Schalen realisierbar.

Ein Vorteil der erfindungsgemäßen Ausgestaltung nach Anspruch 3 liegt darin, daß durch den frei wählbaren Abstand zwischen der Andruckfläche und den Schrauben der Führungsleiste, mit denen diese am Zylinderkopf befestigt ist, eine verbesserte Zugänglichkeit der Schrauben ermöglicht wird und dadurch die Montage erheblich vereinfacht wird.

Die Ausgestaltung der Erfindung nach Anspruch 4 zeigt eine bevorzugte Bauausführung der Einrichtung für eine mehrzylindrige Brennkraftmaschine. Durch die Verwendung lediglich einer Führungsleiste für mehrere Flansche wird eine wesentliche Reduzierung der Bauteile erreicht.

Ein Vorteil der Ausgestaltung der Erfindung nach Anspruch 5 liegt darin, daß die Montierbarkeit durch die Lage der Befestigungsmittel weiter verbessert wird.

Eine besonders vorteilhafte Ausgestaltung der Erfindung stellt Anspruch 8 dar. Durch die vorschlagsgemäße Blechdichtung, deren Blechlagen eine oder mehrere verformbare Sicken aufweisen, wird zum einen die Dichtfunktion sichergestellt, zum anderen ist über die Zahl und/oder Abmessung der Sicken gleichzeitig der Anpreßdruck der Blechdichtung einstellbar, wodurch die Blechdichtung gleichzeitig eine Federfunktion erfüllt und somit auch eine Feder darstellt. So wird bei normalen Betriebsbedingungen der Flansch am Zylinderkopf durch die Reibung der Vorspannkraft dieser Feder festgehalten. Bei erhöhten Längsdehnungskräften wird die Reibung der besagten Vorspannkraft überwunden und es kann in einer Relativbewegung zwischen Flansch und Zylinderkopf ein Längenausgleich stattfinden, durch den die Längsdehnungskräfte erheblich reduziert werden.

Durch die Ausführung der Erfindung nach Anspruch 10 wird erreicht, daß die Hauptbewegung des Rohrkrümmers beim Längenausgleich in Motorlängsrichtung erfolgt. Normal zur Motorlängsrichtung erfolgt, in der Auflagefläche des Flansches, lediglich eine geringfügige Relativbewegung. Durch diese Maßnahme wird ein unerwünschtes Kippen des Rohrkrümmers in den durch die Aufnahmetaschen gebildeten Längsführungen verhindert.

Weitere Vorteile der Erfindung gehen aus den übrigen Unteransprüchen und der Beschreibung hervor.

In der Zeichnung ist die Erfindung anhand eines Ausführungsbeispiels näher erläutert. Es zeigen:

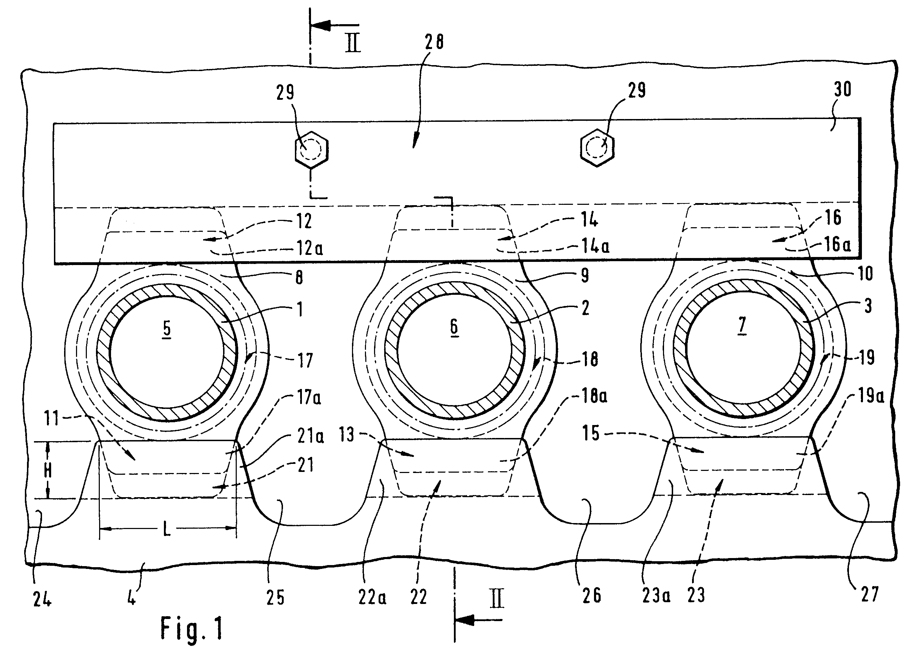

- Fig. 1: in einer schematischen Darstellung eines Zylinderkopfteils einer Brennkraftmaschine eine Draufsicht einer erfindungsgemäßen Einrichtung zum Anschluß eines Sammelrohres mit Rohrkrümmern an einen Zylinderkopf, wobei von den Rohrkrümmern lediglich die Flansche dargestellt sind und jeder Flansch zwei Laschen aufweist und wobei auf einer Seite des Zylinderkopfes die jeweilige Lasche in ihre jeweils zugehörige Aufnahmetasche eingeschoben ist und die Laschen auf der anderen Seite durch eine erfindungsgemäße Führungsleiste gehalten sind, wobei die Führungsleiste mit lösbaren Befestigungsmitteln am Zylinderkopf befestigt ist,
- Fig. 2: einen Querschnitt II - II von Fig. 1 und
- Fig. 3: eine Detailansicht des in Fig. 2 gekennzeichneten Bereichs, in der die erfindungsgemäße Blechdichtung mit federnd wirkenden Sicken dargestellt ist.

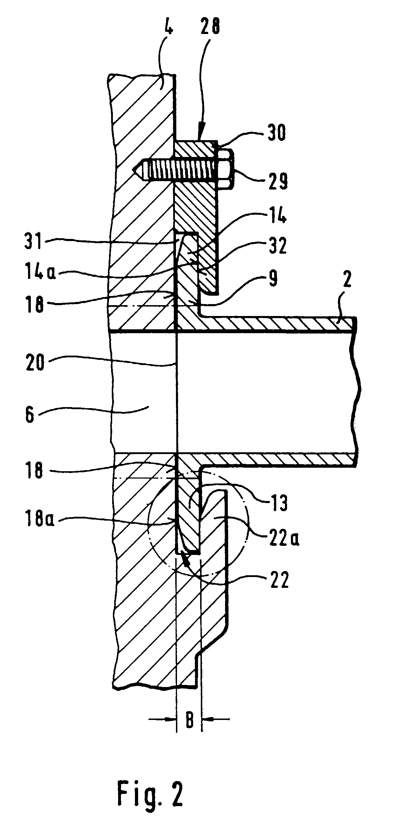

Die Fig. 1 und 2 zeigen eine Einrichtung zum Anschluß mehrerer Rohrkrümmer 1 - 3 eines nicht näher dargestellten Abgassammelrohres an einen Zylinderkopf 4 einer mehrzylindrigen Brennkraftmaschine in montiertem Zustand.
Der Zylinderkopf 4 umfaßt mehrere nach außen hin offene Gaskanäle 5 - 7 (Auslaßkanäle), an die die Rohrkrümmer 1 - 3 angeschlossen sind. Die Rohrkrümmer 1 - 3, die in Fig. 1 und 2 geschnitten dargestellt sind, weisen an ihren dem Zylinderkopf 4 zugewandten Ende Flansche 8 - 10 auf, wobei jeder der Flansche 8 - 10 zwei gegenüberliegende, bezüglich des jeweils zugeordneten Gaskanals 5 - 7 in Motorquerrichtung nach außen gerichtete Laschen 11 - 16 besitzt.

In der Umgebung der Mündungen der Gaskanäle 5 - 7 im Zylinderkopf 4 befinden sich ebene Auflageflächen 17 - 19 für die Flansche 8 - 10 nebst zugehöriger Dichtung 20 (siehe Fig. 2). Die Flansche 8 - 10 sind mit dem Zylinderkopf über die Dichtung 20, die unten noch näher beschrieben wird, abdichtend verbunden.

Unterhalb der jeweiligen Gaskanäle 5 - 7 sind einstückig mit dem Zylinderkopf 4 verbundene, nach oben hin offene, nutförmige Aufnahmetaschen 21 - 23 zur Aufnahme der Laschen 11, 13 und 15 ausgebildet. Dabei wird der untere Teil 17a - 19a der jeweiligen Auflagefläche 17 - 19 von einem Steg 21a - 23a der entsprechenden Aufnahmetasche 21 - 23 abgedeckt. Die Breite B der Aufnahmetaschen 21 - 23 ist auf die Dicke der Laschen 11, 13, 15 derart abgestimmt, daß sich bei eingeschobener Lasche 11, 13, 15 in montiertem Zustand der Einrichtung die dem jeweiligen Gaskanal 5 - 7 abgewandte Seite der Laschen 11, 13, 15 an dem Steg 21a - 23a der Aufnahmetasche 21 - 23 abstützt und so eine Klemmung zwischen dem Steg 21a - 23a und dem diesem gegenüberliegenden unteren Teil 17a - 19a der Aufnahmeflächen 17 - 19 erreichbar ist.

Wie in Fig. 1 dargestellt, besitzen die Aufnahmetaschen 21 - 23 in etwa die Länge L und Höhe H der Laschen 11, 13, 15, wobei die in Motorlängsrichtung zwischen Aufnahmetaschen 21 - 23 erkennbaren Ausschnitte 24 - 27 der Gewichtsreduzierung dienen.

Gegenüber der Aufnahmetasche 21 - 23 ist ein den Flanschen 8 - 10 zugeordnetes Spannmittel 28 angeordnet, das eine am Zylinderkopf 4 mit Schrauben 29 lösbar befestigte und in Motorlängsrichtung verlaufende einstückige Führungsleiste 30 umfaßt. Mit besagter Führungsleiste 30 sind die Flansche 8 - 10 über deren zweite Laschen 12, 14, 16 nebst ihren Anlageflächen 12a, 14a, 16a an den Zylinderkopf 4 anpreßbar. Die Führungsleiste 30 ist nach der Art einer Spannpratze ausgebildet, die eine Andruckfläche 32 und von dieser in Motorquerrichtung beabstandet angeordnete lösbare Befestigungsmittel (Schrauben 29) umfaßt. In montiertem Zustand der Einrichtung bildet somit die Führungsleiste 30 zusammen mit dem Zylinderkopf 4 eine nach unten hin offene Nut (Tasche 31), in der die Laschen 12, 14, 16 einklemmbar sind.

Die Verspannung des Flansches 8 - 10 nebst Dichtung 20 mit dem Zylinderkopf 4 erfolgt, in dem die Andruckfläche 32 der Führungsleiste 30 auf die dem Gaskanal 5 - 7 abgewandten Anlageflächen 12a, 14a, 16a der Laschen 12, 14, 16 mittels der Schrauben 29 gedrückt wird.

Die lösbaren Befestigungsmittel (Schrauben 29) zur Befestigung der Führungsleiste 30 am Zylinderkopf 4 sind, wie in Fig. 1 zu erkennen ist, im wesentlichen zwischen den Gaskanälen 5 - 7 benachbarter Zylinder und außerhalb der Flansche 8 - 10 angeordnet.

In einer Ausgestaltung der Erfindung kann die Zahl der Befestigungsmittel (Schrauben 29) kleiner sein als die Zahl der Rohrkrümmer des Sammelrohres. So kann beispielsweise die Führungsleiste eines Auspuffsammelrohres einer Fünfzylinder-Brennkraftmaschine, also eines Sammelrohres mit fünf Rohrkrümmern, mit lediglich drei oder vier Schrauben am Zylinderkopf befestigt sein.

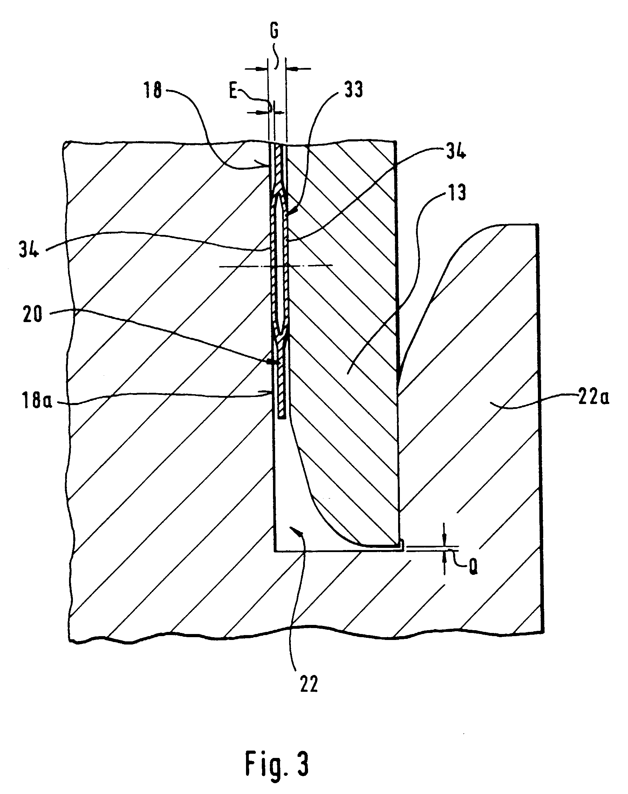

In montiertem Zustand der Einrichtung ist eine Relativbewegung zwischen Flansch 5 - 7 und Zylinderkopf 4 in der jeweiligen Auflagefläche 17 - 19 des Flansches 5 - 7 ermöglicht, wobei zwischen jedem Flansch 5 - 7 und Zylinderkopf 4 eine in Fig. 3 dargestellte Feder 33 angeordnet ist, über die der Anpreßdruck des jeweiligen Flansches 5 - 7 definiert einstellbar ist. In Fig. 3 werden gleiche Bauteile von Fig. 1 und 2 mit gleichen Bezugszeichen gekennzeichnet.

In einer bevorzugten Ausführungsform der Erfindung ist die Feder 33 in der Dichtung 20 integriert, wobei in diesem Fall die Dichtung 20 eine ein- oder mehrlagige Blechdichtung ist, die mehrere im wesentlichen elastisch verformbare Sicken 34 (siehe Fig. 3) aufweist, wobei über Zahl und/oder Abmessung der Sicken 34 der Anpreßdruck der Blechdichtung einstellbar ist. Beispielhafte Zahlenwerte für die Erhöhung E einer einzelnen Sicke 34 liegen zwischen 0,2 und 0,7 mm bei einer Gesamtdicke G der Dichtung 20 von 0,1 bis 3 mm. In Fig. 3 beträgt beispielsweise die Erhöhung E = 0,3 mm bei einer Gesamtdicke G der Dichtung 20 von G = 1,2 mm.

Zur Vermeidung von unerwünschten Kippbewegungen des Rohrkrümmers soll sichergestellt werden, daß die Ausgleichsbewegung des Rohrkrümmers vornehmlich in Motorlängsrichtung stattfindet. Deshalb beträgt in montiertem Zustand der Einrichtung das Querspiel Q zwischen der ersten Lasche 11, 13, 15 und der Aufnahmetasche 21 - 23 sowie das Querspiel Q zwischen der zweiten Lasche 12, 14, 16 und der Führungsleiste 30 nur lediglich 0,1 - 0,5 mm. Hingegen ist durch die in Motorlängsrichtung verlaufende durchgehend offene Nut sowohl der Aufnahmetaschen 21 - 23 als auch der Führungsleiste 30 sichergestellt, daß die Relativbewegung zwischen Flansch 5 - 7 und Zylinderkopf 4 vorzugsweise in Motorlängsrichtung erfolgt.

In einer weiteren Ausführung der Erfindung kann anstelle der integrierten Dichtung und Feder auch eine separate Serienschaltung von Feder und Dichtung verwendet werden. Ferner kann in einer weiteren Ausführung der Erfindung die Dichtung und/oder die Feder vor der Montage des Rohrkrümmers auf dem Flansch 5 - 7 befestigt oder in diesem integriert sein.

## Patentansprüche

1. Einrichtung zum Anschluß eines Rohrkrümmers an einen nach außen hin offenen Gaskanal eines Zylinderkopfes einer Brennkraftmaschine mit einer im Bereich des Gaskanals am Zylinderkopf angeordneten Aufnahmetasche, in die ein Teil eines dem Gaskanal zugeordneten Flansches des Rohrkrümmers einschiebbar und über diese am Zylinderkopf abstützbar ist, wobei außerhalb der Aufnahmetasche dem Flansch zugeordnete Spannmittel angeordnet sind und wobei der Flansch mit dem Zylinderkopf über eine Dichtung abdichtend verbunden ist,
**dadurch gekennzeichnet,**
daß das Spannmittel (28) mindestens eine am Zylinderkopf (4) lösbar befestigbare Führungsleiste (30) umfaßt, über die der mindestens eine Flansch (9) an den Zylinderkopf (4) anpreßbar ist, wobei in montiertem Zustand der Einrichtung durch eine zwischen Flansch (9) und Zylinderkopf (4) angeordnete Feder (33), über die der Anpreßdruck des Flansches (9) definiert einstellbar ist, eine Relativbewegung zwischen Flansch (9) und Zylinderkopf (4) ermöglicht ist.

2. Einrichtung nach Anspruch 1,
**dadurch gekennzeichnet,**
daß der Flansch (9) zwei gegenüberliegende, bezüglich des zugeordneten Gaskanals (6) nach außen gerichtete Laschen (13,14) umfaßt, wobei die erste Lasche (13) in die Aufnahmetasche (22) einsteckbar ist und die zweite Lasche (14) eine Anlagefläche (14a) für die mindestens eine Führungsleiste (30) aufweist.

3. Einrichtung nach Anspruch 1 oder 2,
**dadurch gekennzeichnet,**
daß die mindestens eine Führungsleiste (30) zusammen mit dem Zylinderkopf (4) eine Tasche (31) zur Aufnahme der zweiten Lasche (14) bildet, wobei der Flansch (9) über eine Andruckfläche (32) der Führungsleiste (30), die der Anlagefläche (14a) der zweiten Lasche (14) zugeordnet ist, mit dem Zylinderkopf (4) verspannbar ist und wobei die lösbaren Befestigungsmittel (29) von der Andruckfläche (32) beabstandet angeordnet sind.

4. Einrichtung nach einem der Ansprüche 1 bis 3,
**dadurch gekennzeichnet,**
daß bei mehrzylindrigen Brennkraftmaschinen mit in Reihe angeordneten Zylindern je Zylinderreihe ein einstückiges Sammelrohr mit mehreren Rohrkrümmern (1-3) nebst Flanschen (8-10) aufweist, wobei jeder Flansch (8-10) über die erste Lasche (11,13,15) in eine zugeordnete Aufnahmetasche (21,22,23) einklemmbar und das Sammelrohr an dem Zylinderkopf (4) zusätzlich über die jeweils zweiten Laschen (12,14,16) über eine einstückige Führungsleiste (30) fixierbar ist.

5. Einrichtung nach Anspruch 3 oder 4,
**dadurch gekennzeichnet,**
daß die Befestigungsmittel (29) zur Befestigung der Führungsleiste (30) am Zylinderkopf (4) im wesentlichen zwischen den Gaskanälen (5-7) benachbarter Zylinder und außerhalb der Flansche (8-10) angeordnet sind.

6. Einrichtung nach Anspruch 5,
**dadurch gekennzeichnet,**
daß die Zahl der Befestigungsmittel (29) kleiner ist als die Zahl der Rohrkrümmer (8-10) des Sammelrohres.

7. Einrichtung nach Anspruch 1,
**dadurch gekennzeichnet,**
daß die Feder (33) in der Dichtung (20) integriert ist.

8. Einrichtung nach Anspruch 7,
**dadurch gekennzeichnet,**
daß die Dichtung (20) eine ein- oder mehrlagige Blechdichtung ist, die mehrere im wesentlichen elastisch verformbare Sicken (34) aufweist, wobei über Zahl, Anordnung und/oder Abmessung der Sicken (34) der Anpreßdruck der Blechdichtung einstellbar ist.

9. Einrichtung nach Anspruch 1,
**dadurch gekennzeichnet,**
daß eine Flachdichtung und die Feder (33) separat hintereinander angeordnet sind.

10. Einrichtung nach einem der Ansprüche 1 bis 9,
**dadurch gekennzeichnet,**
daß in montiertem Zustand der Einrichtung das Querspiel (Q)zwischen der ersten Lasche (11,13,15) und der Aufnahmetasche (21-23) sowie das Querspiel (Q) zwischen der zweiten Lasche (12,14,16) und der Tasche (31) der Führungsleiste (30) 0,1 - 0,5 mm beträgt und daß die in der Auflagefläche (17-19) des Flansches (8-10) erfolgende Relativbewegung zwischen Flansch (8-10) und Zylinderkopf (4) vorzugsweise in Motorlängsrichtung erfolgt.

11. Einrichtung nach einem der Ansprüche 1 bis 10,
**dadurch gekennzeichnet,**
daß die Dichtung (20) und/oder die Feder (33) vor der Montage des Rohrkrümmers (1-3) auf dem Flansch (8-10) befestigt oder in dem Flansch (8-10) integriert ist.

12. Einrichtung nach einem der Ansprüche 1 bis 11,
**dadurch gekennzeichnet,**
daß Führungsleiste(30), Flansch (8-10) und/oder Dichtung (20) mit einer Oberflächenbeschichtung zur Erzielung definierter Reibwerte versehen sind.

13. Einrichtung nach einem der Ansprüche 1 bis 12,
**dadurch gekennzeichnet,**
daß die Dichtung (20) mit einer Oberfächenbeschichtung zur Erzielung einer Mikroabdichtung versehen is.t

14. Einrichtung nach einem der Ansprüche 1 bis 13,
**dadurch gekennzeichnet,**
daß die Aufnahmetaschen (21 - 23), insbesondere die Stege (21a - 23a) in der Art der Führungsleiste (30) als ein mit dem Zylinderkopf (4) lösbar verbindbares Bauelement ausgebildet ist.
